# EUROPEAN PATENT APPLICATION

(11) **EP 2 706 682 A1**
(43) Date of publication of application: **12.03.2014**
(21) Application number: 11864965.6
(22) Date of filing: 31.12.2011
(51) Int. Cl.: H04B 10/08

(54) **OPTICAL NETWORK CHANNEL DETECTION METHOD AND DEVICE**

(30) Priority: 06.05.2011 CN 201110117070
(71) Applicant: ZTE Corporation, Shenzhen, Guangdong 518057 (CN)
(72) Inventor: MA, Heng, Shenzhen, Guangdong 518057 (CN); WANG, Huitao, Shenzhen, Guangdong 518057 (CN)
(74) Representative: Bittner, Bernhard
(86) International application number: PCT/CN2011/085167
(87) International publication number: WO 2012/152050

(57) **Abstract**

The disclosure discloses a method for detecting an optical network channel, which includes that: an upstream node starts a pilot-tone-modulation-and-comparison function, and sends set additional information as additional modulation information and additional control information to a downstream node; and the downstream node receives the additional modulation information and the additional control information and comparing the additional modulation information with the additional control information, generates a report according to a comparison result, and sends the report to a management system. The disclosure also discloses a device for detecting an optical network channel. By means of the method and device of the disclosure, a position where a failure occurs on a channel can be detected quickly and a detecting rate of an optical network can be increased. Furthermore, the method and device are easy to achieve, simplify a structure of equipment, and improve a processing ability of the equipment.

## Description

### TECHNICAL FIELD

The disclosure relates to the field of optical network communications, and in particular to a method and device for detecting an optical network channel.

### BACKGROUND

Along with rapid development of mobile networks and internet services, there is higher requirement for an upper layer application network to perform bandwidth supplying, maintenance and management on a basic hosted network. Recently, the scale of optical networks expands sharply, and network systems are widely deployed in various places around the world. An optical Wavelength Division Multiplexing (WDM) technique, as one of core techniques of an optical network, is also applied among various networks of an optical network. A mass of optical fiber interconnection and intensive WDM in the optical network bring great pressure to transmission, exchanging and management of the optical network, especially management and maintenance work is becoming increasingly enormous. Improving control, management and maintenance abilities of an optical network transmission system and reducing an operational cost have become the consensus of the industry.

Optical signals in the optical network are transmitted in form of a multiplexing frame. A traditional optical network loads many monitoring information on a transmission channel by management and maintenance bytes of a multiplexing frame. This technique improves maintenance and management abilities of the optical network transmission system greatly. However, during a process of transmission, an intermediate node needs to convert an optical signal into an electric signal when detecting a channel in the optical network. The converting cost is high and a slow signal transmission speed reduces usage efficiency of the optical network, which are castigated by users.

### SUMMARY

In view of this, the disclosure is intended to provide a method and device for detecting an optical network channel, being capable of quickly detecting a position where a failure occurs on a channel and accelerating the detection of an optical network. Furthermore, the method and device are easy to achieve, simplify a structure of equipment, and improve a processing ability of the equipment.

To this end, the technical solutions of the disclosure are as follows.

This disclosure provides a method for detecting an optical network channel, which includes that: an upstream node starts a pilot-tone-modulation-and-comparison function, and sends set additional information as additional modulation information and additional control information to a downstream node; and the downstream node receives the additional modulation information and the additional control information and comparing the additional modulation information with the additional control information, generates a report according to a comparison result, and sends the report to a management system.

In the aforementioned solution, said starting a pilot-tone-modulation-and-comparison function may include that:
the upstream node determines that the pilot-tone-modulation-and-comparison function is not started, starts the pilot-tone-modulation-and-comparison function, and sends a command of starting the pilot-tone-modulation-and-comparison function to the downstream node.

In the aforementioned solution, said sending set additional information as additional modulation information and additional control information to a downstream node may include:
sending the additional information as the additional control information to the downstream node via a control channel; and modulating an optical wavelength signal by using the additional information as the additional modulation information, and sending the optical wavelength signal to the downstream node via a wavelength channel.

In the aforementioned solution, said receiving, by the downstream node, the additional modulation information and the additional control information and comparing the additional modulation information with the additional control information may include:
receiving the additional control information from a control channel, determining that the pilot-tone-modulation-and-comparison function is started, and scanning additional modulation information queue; or receiving an optical wavelength signal transmitted via a wavelength channel, demodulating the optical wavelength signal to obtain the additional modulation information, determining that the pilot-tone-modulation-and-comparison function is started, and scanning additional control information queue; and
comparing the additional modulation information with the additional control information.

In the aforementioned solution, the method may further include that: the downstream node adds a time identifier into the received additional modulation information and the received additional control information, and deletes additional modulation information or additional control information that is stored in the additional modulation information queue or the additional control information queue and exceeds a preset time.

The disclosure further provides a device for detecting an optical network channel, which includes: a control plane, a pilot-tone-modulation-and-identification subsystem and a transport plane, wherein
the control plane is configured to: start a pilot-tone-modulation-and-comparison function and send set additional information to the pilot-tone-modulation-and-identification subsystem; and receive a report from the pilot-tone-modulation-and-identification subsystem and send the report to a management system;
the pilot-tone-modulation-and-identification subsystem is configured to:
when located at an upstream node, send the additional information sent by the control plane as additional control information to a downstream node, and send the additional information as additional modulation information to the transport plane; and
when located at the downstream node, acquire the additional control information from the upstream node and demodulate the additional modulation information sent by the transport plane, compare the additional modulation information with the additional control information, generate a report according to a comparison result, and send the report to the control plane; and
the transport plane is configured to:
when located at the upstream node, send the additional modulation information sent by the pilot-tone-modulation-and-identification subsystem to the downstream node; and
when located at the downstream node, forward the received additional modulation information to the pilot-tone-modulation-and-identification subsystem.

In the aforementioned solution, the pilot-tone-modulation-and-identification subsystem may further include: a extending signalling module, wherein
the extending signalling module may be configured to: receive a command of starting a pilot-tone-modulation-and-comparison function from the control plane, determine that the pilot-tone-modulation-and-comparison function is not started, start the pilot-tone-modulation-and-comparison function, and send the command of starting a pilot-tone-modulation-and-comparison function to the downstream node; and
correspondingly, the control plane may be configured to send the command of starting a pilot-tone-modulation-and-comparison function to the extending signalling module.

In the aforementioned solution, the pilot-tone-modulation-and-identification subsystem may further include: a modulation-and-demodulation agency module, wherein
the modulation-and-demodulation agency module may be configured to: when located at the upstream node, modulate an optical wavelength signal by using the additional information sent by the control plane as the additional modulation information, and send the optical wavelength signal to the downstream node; and
correspondingly, the extending signalling module may be configured to: when located at the upstream node, send the additional information as the additional control information to the downstream node via a control channel; and send the additional information to the modulation-and-demodulation agency module.

In the aforementioned solution, the pilot-tone-modulation-and-identification subsystem may further include: a comparing module, wherein
the comparing module may be configured to:
receive the additional control information from the extending signalling module, and scan additional modulation information queue; or receive the additional modulation information, and scan additional control information queue; and
compare the additional control information with the additional modulation information;
correspondingly, the extending signalling module may be configured to, when located at the downstream node: receive the additional control information from the upstream node, determine that the pilot-tone-modulation-and-comparison function is started, and send the additional control information to the comparing module; or after receiving a notification of the modulation-and-demodulation agency module for inquiring whether the pilot-tone-modulation-and-comparison function is started, inquire that the pilot-tone-modulation-and-comparison function is started, and notify the modulation-and-demodulation agency; and
the modulation-and-demodulation agency may be configured to, when located at the downstream node: demodulate the additional modulation information from the received optical wavelength signal from the transport plane of the downstream node, inquire by the extending signalling module that the pilot-tone-modulation-and-comparison function is started, and send the additional modulation information to the comparing module.

In the aforementioned solution, the comparing module may be further configured to: add a time identifier into the received additional modulation information or the received additional control information, and delete additional modulation information or additional control information that is stored in the additional modulation information queue or the additional control information queue and exceeds a preset time.

From the above, with the method and device for detecting an optical network channel according to the disclosure, a wavelength channel is detected by comparing addition control information transmitted via a control channel with addition modulation information transmitted via the wavelength channel, a position where a failure occurs on a channel can be detected quickly without an photoelectric conversion, thus increasing a detecting rate of an optical network. Furthermore, the method and device are easy to achieve, simplify a structure of equipment, and improve a processing ability of the equipment.

### BRIEF DESCRIPTION OF THE DRAWINGS

Fig. 1 is a schematic flowchart of an embodiment of a method for detecting an optical network channel according to the disclosure; and
Fig. 2 is a schematic composition diagram of an embodiment of a device for detecting an optical network channel according to the disclosure.

### DETAILED DESCRIPTION

Some leading research institutes and equipment manufacturers try to use techniques such as optical labels, optical pilot tone modulation and an optical channel associated signal in an optical network, to keep a full optical transmission efficiency, while retaining management and maintenance abilities of optical transmission.

An optical pilot-tone-modulation technique uses various modulation techniques to superpose a small low-frequency sine wave on an optical wavelength signal as an identifier. A system can load various maintenance information and identification information by using a low-frequency signal, and various relay ends can extract additional information without a photoelectric conversion, thus achieving monitoring and maintenance of a wavelength channel. Such the technique can be used to detect a channel in an optical network.

The basic idea of the disclosure is that: an upstream node starts a pilot-tone-modulation-and-comparison function, and sends set additional information as additional modulation information and additional control information to a downstream node; and the downstream node receives the additional modulation information and the additional control information, compares the additional modulation information with the additional control information, generates a report according to a comparison result, and sends the report to a management system.

The disclosure is elaborated below by means of specific embodiments and drawings.

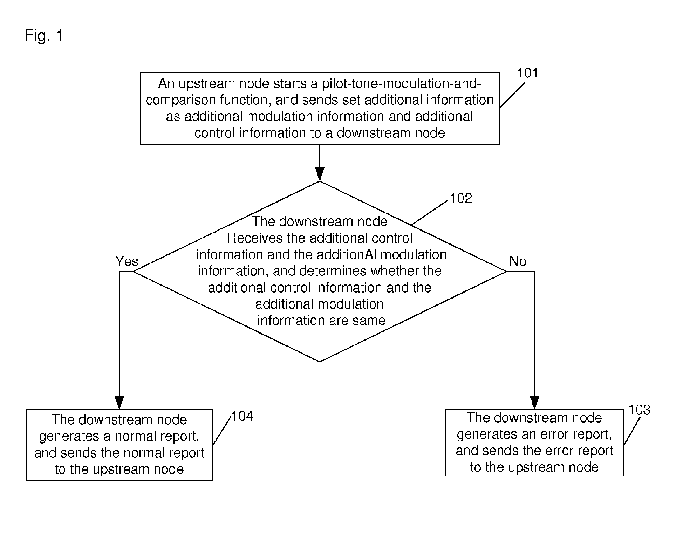

As shown in Fig. 1, a method for detecting an optical network channel specifically includes the following steps:
Step 101: An upstream node starts a pilot-tone-modulation-and-comparison function, and sends set additional information as additional modulation information and additional control information to a downstream node.

Specifically, the upstream node starts a pilot-tone-modulation-and-comparison function of the upstream node, and sends a command of starting the pilot-tone-modulation-and-comparison function to the downstream node; and the downstream node starts a pilot-tone-modulation-and-comparison function of the downstream node. The upstream node determines that a wavelength service connection between the upstream node and the downstream node is established or operated normally, and sets the additional information.

Said starting includes that: starting the pilot-tone-modulation-and-comparison function when nodes, including the upstream node and the downstream node, determine that the pilot-tone-modulation-and-comparison function is not started, which specifically includes that: a pilot-tone-modulation status identifier of a channel to be detected is read, if the status of the identifier is started, then it is indicated that the pilot-tone-modulation-and-comparison function is started, and other processing is not needed; if the status of the identifier is stopped, then it is indicated that the pilot-tone-modulation-and-comparison function is not started, and the status of the identifier is modified to started; wherein the channel to be detected can be set as needed.

Said determining that a wavelength service connection between the upstream node and the downstream node is established or operated normally includes that: the upstream node sends a signalling of establishing a connection to the downstream node, and if the upstream node receives from the downstream node a signalling that a connection is established, then it is indicated that the wavelength service connection is established or operated normally.

Said setting the additional information includes that: the upstream node acquires information such as a node name, a link and a port of the downstream node, and then uses the information of the downstream node to constitute the additional information with a service connection identifier generated randomly according to a preset identifier strategy. Said acquiring includes that: the upstream node reads the information such as the node name, the link and the port of the downstream node and the service connection identifier from a network management system, or the upstream node acquires the information such as the node name, the link and the port of the downstream node and the service connection identifier according to allocation of a control plane of the upstream node. Said identifier strategy can adopt any method only needing to ensure that generated service connection identifiers are not repeated. Said service connection identifiers are used to identify services transmitted among identification nodes.

Said sending set additional information as additional modulation information and additional control information to a downstream node includes that: the upstream node sends the additional information to the downstream node via a control channel, wherein additional information sent via a control channel is referred to as additional control information. Said sending can refer to send by an object included in a message of an extending signalling protocol, for example, information such as a service connection identifier, a node name, a link and a port in additional control information is included in a ResvConf extending message object based on Reservation Protocol-Traffic Engineering (RSVP-TE). On the other hand, the upstream node modulates an optical wavelength signal by using the additional information, and sends the optical wavelength signal to the downstream node via a wavelength channel, wherein additional information sent via a wavelength channel is referred to as additional modulation information. Said sending can refer to send periodically according to a set period or send after a service connection is established successfully.

Step 102: The downstream node receives the additional control information and the additional modulation information, and determines whether the additional control information and the additional modulation information are same, if yes, Step 104 is executed; otherwise, Step 103 is executed.

The downstream node receives the optical wavelength signal transmitted via the wavelength channel, demodulates the optical wavelength signal to obtain the additional modulation information, determines that the pilot-tone-modulation-and-comparison function is started, and scans additional control information queue. When the downstream node determines that the pilot-tone-modulation-and-comparison function is not started, the downstream node generates a report of needing no identification that indicates the channel does not need to be detected, and sends the report to the upstream node. The upstream node recalls the report to a source node, and the source node sends the report to a management system. Meanwhile, the downstream node discards the received the additional modulation information.

Said determining that the pilot-tone-modulation-and-comparison function is started includes that: a pilot-tone-modulation status identifier of a channel to be detected in the node is read, if the status of the identifier is started, then it is indicated that the pilot-tone-modulation-and-comparison function is started; otherwise, it is indicated that the pilot-tone-modulation-and-comparison function is not started. Said scanning additional control information queue includes that: reading the additional control information queue, determining whether additional control information being matched with the additional modulation information exists in the additional control information queue, if no, adding the additional modulation information into additional modulation information queue; if yes, comparing the additional modulation information with the additional control information.

Wherein, the channel to be detected can be set as needed. Said determining whether additional control information being matched with the additional modulation information exists in the additional control information queue includes that: if any information in the additional control information being the same as corresponding information in the additional modulation information exists in the additional control information queue, then determining that the additional control information is matched with the additional modulation information. For example, if the service connection identifier in the additional control information is the same as the service connection identifier in the additional modulation information, then the additional control information is matched with the additional modulation information.

Said comparing the additional modulation information with the additional control information includes that: besides information in the additional modulation information and information in the additional control information that are determined to matched, comparing other information in the additional modulation information with other information in the additional control information one-by-one, if other information in the additional modulation information is the same as other information in the additional control information respectively, then it is determined that the additional modulation information is the same as the additional control information; otherwise, it is determined that the additional modulation information is different from the additional control information. (Other information can also be implemented to compare after nodes plus ports are matched) Alternatively, the downstream node receives the additional control information from a control channel, determines that the pilot-tone-modulation-and-comparison function is started, and scans additional modulation information queue. When the downstream node determines that the pilot-tone-modulation-and-comparison function is not started, the downstream node generates a report of needing no identification, and sends the report to the upstream node. The upstream node recalls the report to a source node, and the source node sends the report to a management system. Meanwhile, the downstream node discards the received the additional control information.

Wherein, said scanning additional control information queue includes that: reading the additional modulation information queue, determining whether additional modulation information being matched with the additional control information exists in the additional modulation information queue, if no, adding the additional control information into additional control information queue; if yes, comparing the additional modulation information with the additional control information. The process of determining that the pilot-tone-modulation-and-comparison function is started is the same as that of determining that the pilot-tone-modulation-and-comparison function is started after the additional modulation information is acquired, which is not repeated here. The process of determining whether additional modulation information being matched with the additional control information exists in the additional modulation information queue is the same as that of determining whether additional control information being matched with the additional modulation information exists in the additional control information queue, which is not repeated here.

The downstream node determines whether the additional modulation information and the additional control information are same, if yes, Step 104 is executed; otherwise, Step 103 is executed. Meanwhile, the downstream node deletes the additional modulation information and the additional control information after they are compared.

Further, the downstream node adds a time identifier into the received additional modulation information and the received additional control information, if additional modulation information or additional control information that is stored in the additional modulation information queue or the additional control information queue exceeds a preset time, the additional modulation information or the additional control information is deleted, so as to avoid accumulation of the additional modulation information or the additional control information.

Step 103: The downstream node generates an error report, and sends the error report to the upstream node; and the processing flow is terminated.

If the additional modulation information and the additional control information are different, then it is indicated that the channel goes wrong. An error report is sent to the upstream node; after receiving the error report, the upstream node sends the error report to the source node; and the source node sends the error report to the management system. Meanwhile, the source node stops sending information via the wavelength channel, so as to prevent error data from being sent to a next node.

Here, the error report includes a node name, a link, a port and a service connection identifier of a current node, i.e., the downstream node in the additional information.

Step 104: The downstream node generates a normal report, and sends the normal report to the upstream node.

If the additional modulation information and the additional control information are same, then it is indicated that the channel is normal. A normal report is sent to the upstream node; after receiving the normal report, the upstream node sends the normal report to the source node; and the source node sends the normal report to the management system. Then, the downstream node as an upstream node sends a command of starting the pilot-tone-modulation-and-comparison function to a corresponding downstream node. The subsequent operations are the same as Step 101 to Step 104 until a destination node. In the solution of the disclosure, the source node is an initial point of a service in a network, and the destination node is an endpoint of the service.

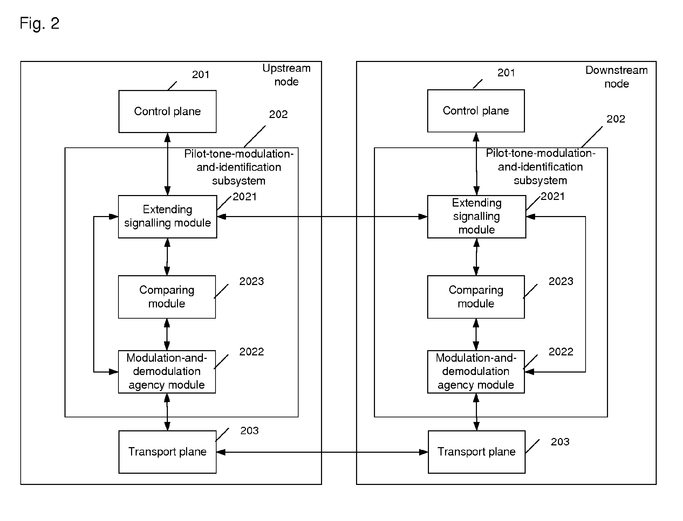

Based on the aforementioned method, the disclosure also provides a device for detecting an optical network channel, which is located at a node in an optical network. As shown in Fig. 2, the device includes: a control plane 201, a pilot-tone-modulation-and-identification subsystem 202 and a transport plane 203, wherein
the control plane 201 is configured to: start a pilot-tone-modulation-and-comparison function, set additional information and send the set additional information to the pilot-tone-modulation-and-identification subsystem 202; and receive a report from the pilot-tone-modulation-and-identification subsystem 202 and send the report to a management system;
the pilot-tone-modulation-and-identification subsystem 202 is configured to:
when located at an upstream node, send the additional information sent by the control plane 201 as additional control information to a downstream node, and send the additional information as additional modulation information to the transport plane 203; and
when located at the downstream node, acquire the additional control information from the upstream node and demodulate the additional modulation information sent by the transport plane 203, compare the additional modulation information with the additional control information, generate a report according to a comparison result, and send the report to the control plane 201; and
the transport plane 203 is configured to:
when located at the upstream node, send the additional modulation information sent by the pilot-tone-modulation-and-identification subsystem 202 to the transport plane 203 of the downstream node; and
when located at the downstream node, forward the received additional modulation information to the pilot-tone-modulation-and-identification subsystem 202.

The pilot-tone-modulation-and-identification subsystem 202 further includes: a extending signalling module 2021;
the control plane 201 is specifically configured to send the command of starting a pilot-tone-modulation-and-comparison function to the extending signalling module 2021; and
the extending signalling module 2021 is configured to receive a command of starting a pilot-tone-modulation-and-comparison function from the control plane 201, determine that the pilot-tone-modulation-and-comparison function is not started, and start the pilot-tone-modulation-and-comparison function; and send the command of starting a pilot-tone-modulation-and-comparison function to the extending signalling module 2021 of the downstream node.

Wherein, said determining that the pilot-tone-modulation-and-comparison function is not started and starting the pilot-tone-modulation-and-comparison function includes: a pilot-tone-modulation status identifier of a channel to be detected is read, if the status of the identifier is started, then other processing is not needed; if the status of the identifier is stopped, then the status of the identifier is modified to started; wherein the channel to be detected can be set as needed.

The pilot-tone-modulation-and-identification subsystem 202 further includes: a modulation-and-demodulation agency module 2022;
the extending signalling module 2021 is configured to, when located at the upstream node: send the additional information sent by the control plane 201 as the additional control information to the extending signalling module 2021 of the downstream node via a control channel, wherein the additional information can be sent to the modulation-and-demodulation agency module 2022 via an object included in a message of an extending signalling protocol; and
the modulation-and-demodulation agency module 2022 is configured to: modulate an optical wavelength signal by using the additional information sent by the extending signalling module 2021 as the additional modulation information, and send the optical wavelength signal to the transport plane 203.

The pilot-tone-modulation-and-identification subsystem 202 further includes: a comparing module 2023;
the extending signalling module 2021 is specifically configured to, when located at the downstream node:
receive the additional control information from the extending signalling module 2021 of the upstream node, and when determining that the pilot-tone-modulation-and-comparison function is started, send the additional control information to the comparing module 2023; otherwise, discard the additional control information, generate a report of needing no identification, and send the report to the control plane 201; or
receive a notification of the modulation-and-demodulation agency module 2022, inquire whether the pilot-tone-modulation-and-comparison function is started, if the pilot-tone-modulation-and-comparison function is started, notify the modulation-and-demodulation agency 2022 of that the pilot-tone-modulation-and-comparison function is started; otherwise, notify the modulation-and-demodulation agency 2022 of that the pilot-tone-modulation-and-comparison function is not started, generate a report of needing no identification, and send the report to the control plane 201; receive a comparison result from the comparing module 2023, generate a report according to the comparison result, and send the report to the control plane 201;
the modulation-and-demodulation agency 2022 is specifically configured to, when located at the downstream node: demodulate the additional modulation information from the received optical wavelength signal from the transport plane 203, when inquiring by the extending signalling module 2021 that the pilot-tone-modulation-and-comparison function is started, send the additional modulation information to the comparing module 2023; otherwise, discard the additional modulation information; said inquiring by the extending signalling module 2021 that the pilot-tone-modulation-and-comparison function is started includes: demodulating the additional modulation information, notifying the extending signalling module 2021, and receiving from the extending signalling module 2021 the notification that the pilot-tone-modulation-and-comparison function is started; and
the comparing module 2023 is configured to, when located at the downstream node;
receive the additional control information from the extending signalling module 2021, and scan additional modulation information queue; or receive the additional modulation information from the modulation-and-demodulation agency 2022, and scan additional control information queue; and
acquire the comparison result, send the comparison result to the extending signalling module 2021, and delete the additional control information or the additional modulation information after the additional control information and the additional modulation information are compared.

The comparing module 2023 is further configured to: add a time identifier into the received additional modulation information or the received additional control information, and delete additional modulation information or additional control information that is stored in the additional modulation information queue or the additional control information queue and exceeds a preset time.

The above are only preferable embodiments of the disclosure, but are not intended to limit the scope of protection of the claims of the disclosure.

## Claims

1. A method for detecting an optical network channel, comprising:
starting, by an upstream node, a pilot-tone-modulation-and-comparison function, and sending set additional information as additional modulation information and additional control information to a downstream node; and
receiving, by the downstream node, the additional modulation information and the additional control information and comparing the additional modulation information with the additional control information, generating a report according to a comparison result, and sending the report to a management system.

2. The method according to claim 1, wherein said starting a pilot-tone-modulation-and-comparison function comprises:
determining, by the upstream node, that the pilot-tone-modulation-and-comparison function is not started, starting the pilot-tone-modulation-and-comparison function, and sending a command of starting the pilot-tone-modulation-and-comparison function to the downstream node.

3. The method according to claim 1, wherein said sending set additional information as additional modulation information and additional control information to a downstream node comprises:
sending the additional information as the additional control information to the downstream node via a control channel; and modulating an optical wavelength signal by using the additional information as the additional modulation information, and sending the optical wavelength signal to the downstream node via a wavelength channel.

4. The method according to claim 1, wherein said receiving, by the downstream node, the additional modulation information and the additional control information and comparing the additional modulation information with the additional control information comprises:
receiving the additional control information from a control channel, determining that the pilot-tone-modulation-and-comparison function is started, and scanning additional modulation information queue; or receiving an optical wavelength signal transmitted via a wavelength channel, demodulating the optical wavelength signal to obtain the additional modulation information, determining that the pilot-tone-modulation-and-comparison function is started, and scanning additional control information queue; and
comparing the additional modulation information with the additional control information.

5. The method according to claim 4, further comprising:
adding, by the downstream node, a time identifier into the received additional modulation information and the received additional control information, and deleting additional modulation information or additional control information that is stored in the additional modulation information queue or the additional control information queue and exceeds a preset time.

6. A device for detecting an optical network channel, comprising: a control plane, a pilot-tone-modulation-and-identification subsystem and a transport plane, wherein
the control plane is configured to: start a pilot-tone-modulation-and-comparison function and send set additional information to the pilot-tone-modulation-and-identification subsystem; and receive a report from the pilot-tone-modulation-and-identification subsystem and send the report to a management system;
the pilot-tone-modulation-and-identification subsystem is configured to:
when located at an upstream node, send the additional information sent by the control plane as additional control information to a downstream node, and send the additional information as additional modulation information to the transport plane; and
when located at the downstream node, acquire the additional control information from the upstream node and demodulate the additional modulation information sent by the transport plane, compare the additional modulation information with the additional control information, generate a report according to a comparison result, and send the report to the control plane; and
the transport plane is configured to:
when located at the upstream node, send the additional modulation information sent by the pilot-tone-modulation-and-identification subsystem to the downstream node; and
when located at the downstream node, forward the received additional modulation information to the pilot-tone-modulation-and-identification subsystem.

7. The device according to claim 6, wherein the pilot-tone-modulation-and-identification subsystem further comprises: a extending signalling module, wherein
the extending signalling module is configured to: receive a command of starting a pilot-tone-modulation-and-comparison function from the control plane, determine that the pilot-tone-modulation-and-comparison function is not started, start the pilot-tone-modulation-and-comparison function, and send the command of starting a pilot-tone-modulation-and-comparison function to the downstream node; and
correspondingly, the control plane is configured to send the command of starting a pilot-tone-modulation-and-comparison function to the extending signalling module.

8. The device according to claim 6 or 7, wherein the pilot-tone-modulation-and-identification subsystem further comprises: a modulation-and-demodulation agency module, wherein
the modulation-and-demodulation agency module is configured to: when located at the upstream node, modulate an optical wavelength signal by using the additional information sent by the control plane as the additional modulation information, and send the optical wavelength signal to the downstream node; and
correspondingly, the extending signalling module is configured to: when located at the upstream node, send the additional information as the additional control information to the downstream node via a control channel; and send the additional information to the modulation-and-demodulation agency module.

9. The device according to claim 8, wherein the pilot-tone-modulation-and-identification subsystem further comprises: a comparing module, wherein
the comparing module is configured to:
receive the additional control information from the extending signalling module, and scan additional modulation information queue; or receive the additional modulation information, and scan additional control information queue; and
compare the additional control information with the additional modulation information;
correspondingly, the extending signalling module is configured to, when located at the downstream node: receive the additional control information from the upstream node, determine that the pilot-tone-modulation-and-comparison function is started, and send the additional control information to the comparing module; or after receiving a notification of the modulation-and-demodulation agency module for inquiring whether the pilot-tone-modulation-and-comparison function is started, inquire that the pilot-tone-modulation-and-comparison function is started, and notify the modulation-and-demodulation agency; and
the modulation-and-demodulation agency is configured to, when located at the downstream node: demodulate the additional modulation information from the received optical wavelength signal from the transport plane of the downstream node, inquire by the extending signalling module that the pilot-tone-modulation-and-comparison function is started, and send the additional modulation information to the comparing module.

10. The device according to claim 9, wherein the comparing module is further configured to: add a time identifier into the received additional modulation information or the received additional control information, and delete additional modulation information or additional control information that is stored in the additional modulation information queue or the additional control information queue and exceeds a preset time.
